(19) Europäisches Patentamt
European Patent Office
Office européen des brevets

(11) **EP 2 221 998 B1**

(12) **EUROPÄISCHE PATENTSCHRIFT**

(45) Veröffentlichungstag und Bekanntmachung des Hinweises auf die Patenterteilung:
**22.06.2011 Patentblatt 2011/25**

(51) Int Cl.:
*H04B 10/08* (2006.01)    *G01M 11/00* (2006.01)

(21) Anmeldenummer: **09180998.8**

(22) Anmeldetag: **30.12.2009**

(54) **Verfahren und Anordnung zur Messung einer optischen Signalleistung**

Method and system for measuring signal strength

Procédé et agencement destinés à la mesure d'une puissance de signal

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.02.2009 DE 102009000988**

(43) Veröffentlichungstag der Anmeldung:
**25.08.2010 Patentblatt 2010/34**

(73) Patentinhaber: **ADVA AG Optical Networking
82152 Martinsried (DE)**

(72) Erfinder:
• **Eiselt, Michael
99334, Kirchheim (DE)**
• **Wald, Toni
36452, Kaltennordheim (DE)**

(74) Vertreter: **Charles, Glyndwr
Reinhard, Skuhra, Weise & Partner GbR
Patent- und Rechtsanwälte
Friedrichstrasse 31
80801 München (DE)**

(56) Entgegenhaltungen:
**EP-A1- 0 946 006    EP-A2- 1 322 052**

• **ROB OTTE ET AL: "Wireless Optical PPM Telemetry and the Influence of Lighting Flicker" IEEE TRANSACTIONS ON INSTRUMENTATION AND MEASUREMENT, IEEE SERVICE CENTER, PISCATAWAY, NJ, US, Bd. 47, Nr. 1, 1. Februar 1998 (1998-02-01), XP011024443 ISSN: 0018-9456**

**Beschreibung**

Die Erfindung betrifft ein Verfahren und eine Anordnung zur Messung einer Leistung eines über einen Lichtwellenleiter übertragenen optischen Nutzsignals.

In einem optischen Zugangsnetzwerk ist die Lichtwellenleiterverbindung zwischen einem peripheren Kommunikationsgerät eines Netzwerkbetreibers und einem Schnittstellengerät eines Nutzers typischerweise Eigentum des Netzwerkbetreibers und wird von diesem betrieben.

Der Netzwerkbetreiber garantiert seinen Kunden bzw. dem Nutzer eine bestimmte Signalqualität bzw. Übertragungsqualität bis zur Schnittstelle des Nutzers.

Bei herkömmlichen Systemen wird daher üblicherweise ein zusätzliches Schnittstellengerät von dem Netzwerkbetreiber am Standort des jeweiligen Nutzers bereitgestellt, welches die Qualität des Signals misst, das dem Nutzer übergeben wird bzw. das von dem Nutzer übernommen wird. Dieses zusätzliche Schnittstellengerät zur Ermittlung der Signalqualität beim Nutzer stellt allerdings für den Netzwerkbetreiber einen zusätzlichen Aufwand dar. Darüber hinaus nimmt dieses Schnittstellenendgerät zusätzlichen Platz am Standort des Nutzers bzw. des Kunden ein. Ein weiterer Nachteil besteht darin, dass das zusätzliche Schnittstellengerät zur Signalsqualitätsmessung selbst Leistung verbraucht und somit der Energieverbrauch ansteigt. Weiterhin benötigt das zur Signalqualitätsmessung vorgesehene Schnittstellengerät eine eigenständige Wartung.

Aus der EP-A-0846006 ist ein Verfahren zur Leitungsmessung nach dem Stand der Technik bekannt.

Es ist daher eine Aufgabe der vorliegenden Erfindung, ein Verfahren und eine Anordnung zur Messung einer Leistung eines über einen Lichtwellenleiter übertragenen optischen Nutzsignals mit minimalem Energieverbrauch zu schaffen.

Die Erfindung schafft ein Verfahren zur Messung einer Leistung eines über einen Lichtwellenleiter übertragenen optischen Nutzsignals mit den im Patentanspruch 1 angegebenen Merkmalen.

Die Erfindung schafft ein Verfahren zur Messung einer Leistung eines über einen Lichtwellenleiter übertragenen optischen Nutzsignals mit den Schritten:

(a) Umwandeln (S1) des übertragenen optischen Nutzsignals in ein pulsförmiges optisches Messsignal, dessen Impulswiederholrate von der Leistung des übertragenen optischen Nutzsignals abhängt;

(b) Auswerten (S2) der Impulswiederholrate des umgewandelten optischen Messsignals zur Ermittlung der Leistung des über den Lichtwellenleiter übertragenen optischen Nutzsignals.

Bei einer Ausführungsform des erfindungsgemäßen Verfahrens wird das optische Nutzsignal über den Lichtwellenleiter zwischen einem Netzwerkbetreiber-Transceiver eines Netzwerkbetreibers und einem Nutzer-Transceiver eines Nutzers übertragen.

Bei einer Ausführungsform des erfindungsgemäßen Verfahrens wird das übertragene optische Nutzsignal auf Seiten des Nutzer-Transceivers mittels eines Leistungssplitters zur Leistungsmessung von dem Lichtwellenleiter zumindest teilweise ausgekoppelt.

Bei einer Ausführungsform des erfindungsgemäßen Verfahrens wird das umgewandelte, pulsförmige, optische Messsignal mittels eines Multiplexers in den Lichtwellenleiter des zu übertragenen optischen Nutzsignals oder in einen anderen Lichtwellenleiter eingekoppelt und zur Auswertung der Impulswiederholrate des pulsförmigen, optischen Messsignals einer Detektionseinrichtung zugeführt, die sich auf Seiten des Netzwerkbetreiber-Transceivers befindet.

Bei einer Ausführungsform des erfindungsgemäßen Verfahrens weist das optische Messsignal eine andere Wellenlänge als das optische Nutzsignal auf.

Bei einer Ausführungsform des erfindungsgemäßen Verfahrens ist die Impulswiederholrate des pulsförmigen, optischen Messsignals proportional zu der Leistung des übertragenen optischen Messsignals.

Die Erfindung schafft ferner eine Messanordnung zur Messung einer Leistung eines über einen Lichtwellenleiter übertragenen optischen Nutzsignals mit den im Patentanspruch 7 angegebenen Merkmalen.

Die Erfindung schafft eine Messanordnung zur Messung einer Leistung eines über einen Lichtwellenleiter übertragenen optischen Nutzsignals mit:

(a) einer Signal-Umwandlungseinrichtung zur Umwandlung des optischen Nutzsignals in ein pulsförmiges optisches Messsignal, dessen Impulswiederholrate von der Leistung des optischen Nutzsignals abhängt; und mit

(b) einer Detektionseinrichtung, die die Impulswiederholrate des umgewandelten pulsförmigen optischen Messsignals zur Ermittlung der Leistung des über den Lichtwellenleiter übertragenen optischen Nutzsignals auswertet.

Bei einer Ausführungsform der erfindungsgemäßen Messanordnung ist ein Leistungssplitter vorgesehen, der das auf dem Lichtwellenleiter übertragene optische Nutzsignal zumindest teilweise auskoppelt.

Bei einer Ausführungsform der erfindungsgemäßen Messanordnung ist ein Multiplexer vorgesehen, der das optische Messsignal in den Lichtwellenleiter des optischen Nutzsignals zurückkoppelt oder in einen anderen Lichtwellenleiter einkoppelt.

Bei einer Ausführungsform der erfindungsgemäßen Messanordnung weist die Signal-Umwandlungseinrichtung auf:

- eine Photodiode, die das ausgekoppelte optische Nutzsignal in einen elektrischen Ladestrom umwandelt,
- einen Kondensator, der durch den Ladestrom bis zum Erreichen einer Schwellwertspannung aufgeladen wird, und
- eine nicht-lineare elektronische Schaltung, die bei Erreichen der Schwellwertspannung den aufgeladenen Kondensator an eine Laserdiode schaltet, wobei sich der Kondensator über die Laserdiode entlädt, welche optische Lichtimpulse aussendet.

Bei einer Ausführungsform der erfindungsgemäßen Messanordnung sind die Signal-Umwandlungseinrichtung und die Detektionseinrichtung an entgegengesetzten Enden des für die Übertragung des optischen Nutzsignals vorgesehenen Lichtwellenleiters vorgesehen.

Die Erfindung schafft ferner einen Lichtwellenleiter zur Übertragung eines optischen Nutzsignals mit den im Patentanspruch 12 angegebenen Merkmalen.

Die Erfindung schafft einen Lichtwellenleiter zur Übertragung eines optischen Nutzsignals, wobei an zumindest einem der beiden Enden des Lichtwellenleiters eine Signal-Umwandlungseinrichtung vorgesehen ist, die das optische Nutzsignal in ein pulsförmiges, optisches Messsignal umwandelt, dessen Impulswiederholrate von der Leistung des übertragenen optischen Nutzsignals abhängt.

Bei einer Ausführungsform des erfindungsgemäßen Lichtwellenleiters ist an dem anderen Ende des Lichtwellenleiters eine Detektionseinrichtung vorgesehen, die die Impulswiederholrate des umgewandelten, pulsförmigen, optischen Messsignals zur Ermittlung der Leistung des über den Lichtwellenleiter übertragenen optischen Nutzsignals auswertet.

Bei einer Ausführungsform des erfindungsgemäßen Lichtwellenleiters weist der Lichtwellenleiter einen Leistungssplitter auf, der das auf den Lichtwellenleiter übertragene optische Nutzsignal zumindest teilweise an die Signal-Umwandlungseinrichtung auskoppelt.

Bei einer Ausführungsform des erfindungsgemäßen Lichtwellenleiters weist der Lichtwellenleiter einen Multiplexer auf, der das optische Messsignal in den Lichtwellenleiter des optischen Nutzsignals zurückkoppelt oder in einen anderen Lichtwellenleiter einkoppelt.

Im Weiteren werden Ausführungsformen des erfindungsgemäßen Verfahrens und der erfindungsgemäßen Anordnung zur Messung einer Leistung eines über einen Lichtwellenleiter übertragenen optischen Nutzsignals mit Bezugnahme auf die beigefügten Figuren beschrieben.

Es zeigen:

Fig. 1: ein einfaches Ablaufdiagramm einer möglichen Ausführungsform des erfindungsgemäßen Verfah- rens zur Messung einer Leistung eines über ei- nen Lichtwellenleiter übertragenen optischen Nutzsignals;

Fig. 2A - 2D: Ausführungsbeispiele einer erfindungsgemäßen Messanordnung zur Messung einer Leistung eines über einen Lichtwellenleiter übertragenen op- tischen Nutzsignals;

Fig. 3: ein Ausführungsbeispiel einer in der erfin- dungsgemäßen Messanordnung verwendeten Signal- Umwandlungseinrichtung;

Fig. 4: ein Ausführungsbeispiel einer in der erfin- dungsgemäßen Messanordnung verwendeten Detek- tionseinrichtung.

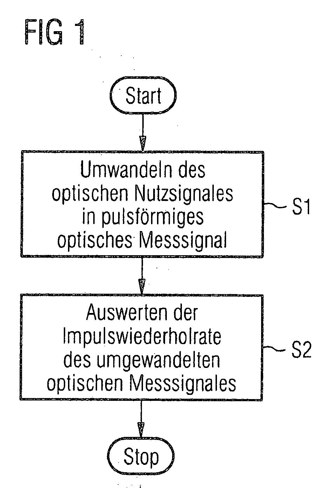

Wie man aus Fig. 1 erkennen kann, erfolgt bei dem erfinddungsgemäßen Verfahren zur Messung einer Leistung eines über einen Lichtwellenleiter übertragenen optischen Nutzsignals der Messvorgang in zwei Schritten.

In einem ersten Schritt S1 wird das über den Lichtwellenleiter übertragene optische Nutzsignal in ein pulsförmiges, optisches Messsignal umgewandelt, dessen Impulswiederholrate von der Leistung des übertragenen optischen Nutzsignals abhängt. Bei einer möglichen Ausführungsform ist dabei die Impulswiederholrate des pulsförmigen, optischen Messsignals proportional zu der Leistung des übertragenen optischen Messsignals.

In einem weiteren Schritt S2 wird die Impulswiederholrate des umgewandelten optischen Messsignals zur Ermittlung der Leistung des über den Lichtwellenleiter übertragenen optischen Nutzsignals ausgewertet.

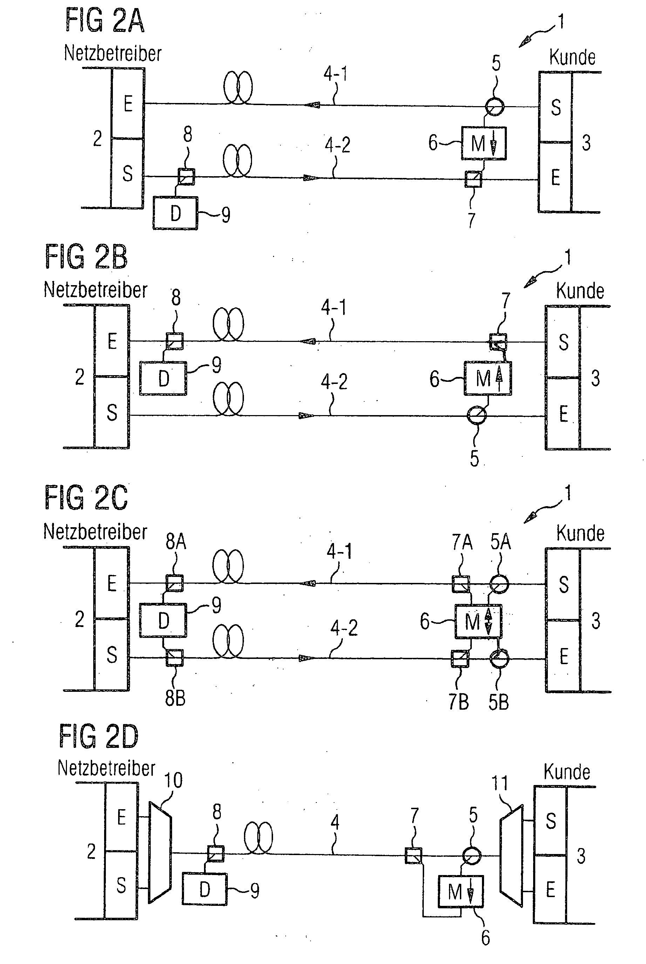

Die Fig. 2A, 2B, 2C, 2D zeigen verschiedene Ausführungsbeispiele einer erfindungsgemäßen Messanordnung 1 zur Messung einer Leistung P eines über einen Lichtwellenleiter übertragenen optischen Nutzsignals.

Das optische Nutzsignal wird über mindestens einen Lichtwellenleiter zwischen einem Transceiver 2 eines Netzwerkbetreibers und einem Transceiver 3 eines Nutzers bzw. eines Kunden übertragen. Beide Transceiver 2, 3 weisen jeweils einen Sender S und einen Empfänger E auf.

In dem in Fig. 2A dargestellten Ausführungsbeispiel besteht eine aus zwei Lichtwellenleitern 4-1, 4-2 bestehende Verbindung zwischen dem Transceiver 2 des Netzwerkbetreibers und dem Transceiver 3 des Nutzers. Über beide Lichtwellenleiter 4-1, 4-2 kann ein optisches Nutzsignal zwischen dem Transceiver 2 des Netzwerkbetreibers und dem Transceiver 3 des Nutzers übertragen werden. Wie in Fig. 2A dargestellt, wird das übertragene optische Nutzsignal auf Seiten des Nutzer-Transceivers 3 mittels eines Leistungssplitters 5 zur Leistungsmessung von dem Lichtwellenleiter 4-1 zumindest teilweise ausgekoppelt. Bei dem in Fig. 2A dargestellten Ausführungsbeispiel wird das ausgekoppelte Signal einer Signal-Umwandlungseinrichtung 6 zugeführt, die das ausgekoppelte optische Nutzsignal in ein pulsförmiges optisches Messsignal umwandelt, dessen Impulswiederholrate von der Leistung P des optischen Nutzsignals abhängt. Bei der in Fig. 2A dargestellten Messanordnung 1 ist ferner ein Multiplexer 7 vorgesehen, der das von der Signal-Umwandlungseinrichtung 6 generierte pulsförmige optische Messsignal in den anderen Lichtwellenleiter 4-2 einkoppelt. In einer möglichen Ausführungsform weist das optische Messsignal eine andere Wellenlänge als das optische Nutzsignal auf. Das umgewandelte pulsförmige optische Messsignal wird bei dem in Fig. 2A dargestellten Ausführungsbeispiel über den Lichtwellenleiter 4-2 zu einem Demultiplexer 8, der das optische Messsignal zu einer Detektionseinrichtung 9, die sich auf Seiten des Netzwerkbetreiber-Transceivers 2 befindet, auskoppelt. Die Detektionseinrichtung 9 wertet die Impulswiederholrate des ausgekoppelten pulsförmigen optischen Messsignals zur Ermittlung der Leistung P des ursprünglichen über den Lichtwellenleiter 4-1 übertragenen optischen Nutzsignals aus.

Bei der in Fig. 2A dargestellten Ausführungsform ist die gemessene Leistung P die Signalleistung des von dem Transceiver 3 des Nutzers ausgesendeten optischen Nutzsignals, das durch den Leistungssplitter 5 aus dem Lichtwellenleiter 4-1 ausgekoppelt wird.

Bei dem in Fig. 2B dargestellten Ausführungsbeispiel ist die durch die Detektionseinrichtung 9 gemessene Leistung P die Signalleistung des von dem Transceiver 2 des Netzwerkbetreibers über den Lichtwellenleiter 4-2 ausgesendeten Signals. Die Signal-Umwandlungseinrichtung 6 erhält von dem Leistungssplitter 5 das auf Seiten des Nutzers ankommende optische Nutzsignal und wandelt dies in ein pulsförmiges optisches Messsignal um, dessen Impulswiederholrate der Leistung P des optischen Nutzsignals entspricht. Mittels des Multiplexers 7 wird das generierte optische Messsignal in einen anderen Lichtwellenleiter 4-1 eingekoppelt und zurück zum Netzwerkbetreiber übertragen. Mittels eines Demultiplexers 8 wird dann das optische Messsignal zu einer Detektionseinrichtung 9 ausgekoppelt.

Bei dem in Fig. 2C dargestellten Ausführungsbeispiel werden zwei Messwerte bzw. Messsignale von der Signal-Umwandlungseinrichtung 6 zu der Detektionseinrichtung 9 übertragen.

Durch einen Leistungssplitter 5A wird das optische Nutzsignal auf dem Lichtwellenleiter 4-1 zu der Signal-Umwandlungseinrichtung 6 ausgekoppelt, die ein erstes pulsförmiges optisches Messsignal generiert, dessen Impulswiederholrate der Leistung des ausgekoppelten optischen Nutzsignals entspricht, wobei das optische Messsignal mittels eines Multiplexers 7B in den zweiten Lichtwellenleiter 4-2 einkoppelt, und das eingekoppelte Nutzsignal auf Seiten des Netzwerkbetreibers durch einen Demultiplexer 8B zu der Detektionseinrichtung 9 zu dessen Auswertung ausgekoppelt wird.

Ferner empfängt die Signal-Umwandlungseinrichtung 6 von dem Leistungssplitter 5B das auf den Lichtwellenleiter 4-2 übertragene optische Nutzsignal und wandelt dieses ebenfalls in ein pulsförmiges optisches Messsignal um, dessen Impulswiederholrate der Leistung dieses ausgekoppelten optischen Nutzsignals entspricht. Das gebildete zweite pulsförmige optische Messsignal, dessen Impulswiederholrate beispielsweise direkt proportional zu der Leistung des optischen Signals ist, wird mittels eines Multiplexers 7A in den Lichtwellenleiter 4-1 eingekoppelt und an der anderen Seite mittels des Demultiplexers 8A für die Detektionseinrichtung 9 ausgekoppelt.

Bei den in den Fig. 2A, 2B, 2C dargestellten Ausführungsbeispielen erfolgt eine bidirektionale optische Datenübertragung zwischen dem Transceiver 2 des Netzwerkbetreibers und dem Transceiver 3 des Nutzers auf zwei getrennten Lichtwellenleitern 4-1, 4-2.

Bei der in Fig. 2D dargestellten Ausführungsform erfolgt die Signalübertragung von und zu dem Nutzer über einen einzigen Lichtwellenleiter 4 auf unterschiedlichen Wellenlängen $\lambda$. Auf Seiten des Transceivers 2 des Netzwerkbetreibers ist ein optischer Multiplexer/Demulitplexer 10 vorgesehen und auf Seiten des Transceivers 3 des Nutzers ein optischer Multiplexer/Demultiplexer 11.

Das von dem Sender S des Transceivers 3 des Nutzers mit einer Wellenlänge $\lambda 1$ ausgesendete erste optische Nutzsignal wird bei dem in Fig. 2D dargestellten Ausführungsbeispiel teilweise durch den Leistungssplitter 5 an die Signal-Umwandlungseinrichtung 6 ausgekoppelt und dort in ein pulsförmiges optisches Messsignal umgewandelt, dessen Impulswiederholrate von der Leistung P1 des übertragenen ersten optischen Nutzsignals an der Auskoppelstelle, d. h. dem Ort des Leistungssplitters, abhängt. Dieses optische Messsignal wird mittels des Multiplexers 7 in den Lichtwellenleiter 4 eingekoppelt und durch den Demultiplexer 8 an die Detektionseinrichtung 9 ausgekoppelt. Die Detektionseinrichtung 9 wertet, wie bei der in Fig. 2D dargestellten Ausführungsform, das optische Messsignal aus. Das optische pulsförmige Messsignal weist eine Impulswiederholrate auf, die proportional zur Leistung P1 des ersten optischen Nutzsignals ist, das von dem Sender S des Transceivers 3 des Nutzers ausgesendet wird.

Mit Hilfe der Kenntnis der Sende- und Empfangsleistungen an dem netzbetreiberseitigen Ende der Übertragungsstrecke kann der Vergleich mit dem empfangenen Messwert der Dämpfungsverlust jeweils eines Lichtwellenleiters 4 bei den Ausführungsbeispielen gemäß Fig. 2A, 2B bestimmt werden. Bei dem Ausführungsbeispiel gemäß Fig. 2C kann der Dämpfungsverlust beider Lichtwellenleiter 4-1, 4-2 ermittelt werden. Weiterhin kann bei dem Ausführungsbeispiel gemäß Fig. 2D der Dämpfungsverlust aufgrund des Lichtwellenleiters 4 ermittelt werden.

Bei einer möglichen Ausführungsform wird weiterhin der Messwert auf optische Weise mit einer bestimmten Sendeleistung übertragen und kann auch bei den Ausführungsformen gemäß Fig. 2A, 2B der Dämpfungsverlust beider Lichtwellenleiter 4-1, 4-2 bestimmt werden. Der Verlust des zweiten Lichtwellenleiters 4-2 über die das optische Messsignal übertragen wird, wird dabei aus der empfangenen Messwertübertragungsleistung und der gesendeten Messwertübertragungsleistung bestimmt.

Die auf diese Weise ermittelten Dämpfungsverluste der Übertragungsstrecke bilden für den Netzwerkbetreiber ein Maß für die Qualität der Signalübertragung.

Bei einer möglichen Ausführungsform kann direkt die Signalleistung des optischen Nutzsignals beim Kunden bzw. Nutzer im Vergleich zu Spezifikationswerten als Maß der Übertragungsqualität benutzt werden.

Das Kopplungsverhältnis des eingesetzten Leistungssplitters 5 wird vorzugsweise derart ausgelegt, dass der Verlust der Übertragungsstrecke nur unwesentlich erhöht wird, jedoch genügend Signalleistung zu einer sicheren Bestimmung des Leistungspegels der Signal-Umwandlungseinrichtung 6 zugeführt wird. Bei einer möglichen Ausführungsform kann der Leistungssplitter 5 ein Leistungs-Aufteilungsverhältnis zwischen 90:10 und 99:1 aufweisen.

Bei einer bevorzugten Ausführungsform wird die Wellenlänge $\lambda_M$ des Messsignals derart gewählt, dass sie nicht mit der Wellenlänge des optischen Nutzsignals $\lambda_N$ übereinstimmt. Weist beispielsweise das optische Nutzsignal eine Wellenlänge $\lambda_N$ in einem Wellenlängenbereich von 1510nm bis 1620nm auf, wird beispielsweise für das optische Messsignal eine Wellenlänge $\lambda_M$ in einem anderen Wellenlängenbereich, beispielsweise in einem Wellenlängenbereich von 1280nm bis 1320nm verwendet.

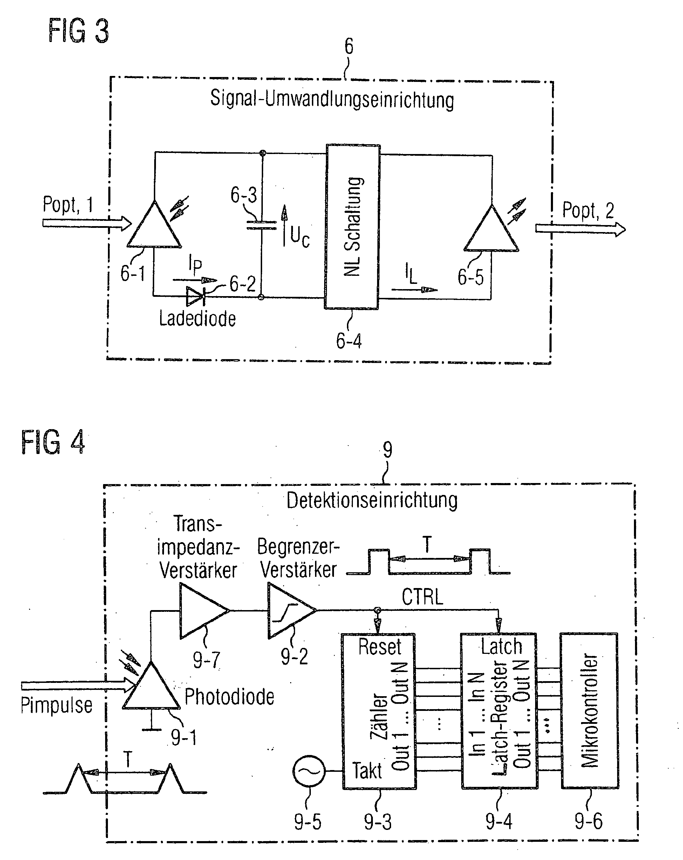

Fig. 3 zeigt ein Blockschaltbild einer möglichen Ausführungsform einer Signal-Umwandlungseinrichtung 6 der erfindungsgemäßen Messanordnung 1. In dem in Fig. 3 dargestellten Ausführungsbeispiel weist die Signal-Umwandlungseinrichtung 6 mindestens eine Photodiode 6-1 auf, die das von dem Leistungssplitter 5 ausgekoppelte optische Nutzsignal in einen elektrischen Ladestrom umwandelt. Das in der Photodiode 6-1 ankommende Lichtsignal setzt Elektronen frei, die zu einem Stromfluss führen. Über eine Ladediode 6-2 wird ein Kondensator 6-3 mit einem Ladestrom bis zum Erreichen einer Schwellwertspannung aufgeladen. Die Spannung $U_c$ an dem Kondensator 6-3 führt nach Erreichen einer Schwellwertspannung $U_{th}$ dazu, dass eine nichtlineare elektronische Schaltung 6-4 den aufgeladenen Kondensator 6-3 an eine Laserdiode 6-5 schaltet, so dass sich der Kondensator 6-3 über die Laserdiode 6-5 entlädt, welche dabei jeweils einen optischen Lichtimpuls aussendet. Während die Leistung und die Zeitdauer der ausgesendeten optischen Impulse durch die Schaltungsparameter der verwendeten elektronischen Schaltung bestimmt sind, ist die Impulswiederholrate der Signalimpulse der Laserdiode 6-5 eine lineare Funktion des Ladestroms des Kondensators 6-3 und somit proportional zu der auf die Photodiode 6-1 fallenden optischen Leistung.

Fig. 4 zeigt ein Blockschaltbild eines Ausführungsbeispiels der Detektionseinrichtung 9, wie sie bei der erfindungsgemäßen Messanordnung 1 eingesetzt werden kann. Die Detektionseinrichtung 9 wertet eine Impulswiederholrate des empfangenen pulsförmigen optischen Messsignals aus. Die Auswertung der Impulswiederholrate dient zur Ermittlung der Leistung des über den Lichtwellenleiter 4 ursprünglich übertragenen optischen Nutzsignals.

Das von dem Demultiplexer 8 ausgekoppelte Messsignal wird einer Photodiode 9-1 der Detektionseinrichtung 9 zugeführt, welche die optische Impulsfolge detektiert. Das detektierte Signal wird anschließend durch einen Transimpedanzverstärker 9-7 verstärkt und in eine elektrische Spannungsimpulsfolge gewandelt. Die Spannungsimpulsfolge wird durch einen Begrenzerverstärker 9-2 verstärkt. Das Ausgangssignal des Begrenzerverstärkers 9-2 bildet ein Kontroll- bzw. Steuersignal für eine Digitalschaltung, welche einen Zähler 9-3 und ein Latch-Register 9-4 aufweist. Der Zähler 9-3 ist an einen Taktgenerator 9-5 angeschlossen und zählt die ansteigenden Signalflanken des angelegten festen Taktsignals. Der Zählerausgang, der beispielsweise aus einem 12 Bit umfassenden Zählwert besteht, ist mit einem Eingang des Latch-Registers 9-4 verbunden. Mit der ansteigenden Signalflanke des Steuersignals wird der Ausgang des Zählers 9-3 in das Latch-Register 9-4 übernommen. Mit der fallenden Signalflanke des Steuersignals CRTL wird der Zähler 9-3 auf Null zurückgesetzt. Der Inhalt des Latch-Registers 9-4 bzw. der Zählwert kann, wie in Fig. 4 dargestellt, durch einen Mikrokontroller 9-6 ausgelesen und ausgewertet werden.

Da der Zählerstand mit der fallenden Signalflanke der optischen Impulsfolge zurückgesetzt wird, und dann mit jeder Periode des festen Taktsignals um einen Wert 1 erhöht wird, ist der Zählerstand bei der ansteigenden Signalflanke des nächsten optischen Impulses proportional zu der Zeit zwischen zwei aufeinanderfolgenden Impulsen und somit umgekehrt proportional zur Leistung des zu messenden optischen Signals.

Die Spannung in dem Kondensator 6-3 innerhalb der Signal-Umwandlungseinrichtung 6 mit der Kapazität C beträgt zur Zeit t:

$$U = \frac{1}{C} \int_{t1}^{t1+t} R \cdot p(\tau)d\tau \qquad (1).$$

Der Kondensator 6-3 ist durch Entladung über die nichtlineare Schaltung 6-4 zum Zeitpunkt t1 vollständig entladen. R steht für Responsitivity der Photodiode 6-1 der Signalumwanduungslungs-Einrichtung 6. Die Signal-Umwandlungseinrichtung 6 erzeugt einen optischen Impuls, wenn die Spannung $U_c$ einen Schwellwert $U_{th}$ erreicht hat. Das ist in Abhängigkeit von der optischen Leistung $p(\tau)$ des empfangenen optischen Nutzsignals der Fall, wenn:

$$\int_{t1}^{t1+t} p(\tau)d\tau = \frac{C \cdot Uth}{R} \qquad (2).$$

Ist die mittlere Leistung $P_{avg}$ während eines Messintervalls:

$$P_{avg} = \frac{\int_{t1}^{t1+t} p(\tau)d\tau}{t} \qquad (3),$$

so wird der optische Signalimpuls nach einer Zeit t generiert:

$$t = \frac{C \cdot Uth}{R \cdot P_{avg}} \qquad (4).$$

Die Zeitdauer t zwischen zwei optischen Signalimpulsen des Messsignals ist somit umgekehrt proportional zu der durchschnittlichen Leistung im Messintervall.

In einer typischen Anwendung liegt die Zeitdauer t zwischen zwei Signalimpulsen in einem Bereich zwischen $10\mu s$ und 1ms. Beträgt die Frequenz des festen Taktsignals 2 MHz läuft der Zähler 9-3 einer Detektionseinrichtung 9 mit einem 12 Bit umfassenden Zählerausgang bei: $2^{12}/2$ MHz = 2,05 ms über.

Diese Zeit stellt die längste messbare Zeitperiode dar. Die kleinste messbare Zeiteinheit beträgt 1/2 MHz = 500 ns.

Dies bedeutet einen maximalen Messfehler von 5 % bei der größten messbaren Leistung (entsprechend dem kleinsten Zeitintervall zwischen zwei Signalimpulsen von $10\mu s$).

Durch Änderung der Zählerbreite des Zählers 9-3 und der Frequenz des festen Taktsignals des Taktsignalgenerators 9-5 kann eine Anpassung der Detektionseinrichtung 9 für den jeweiligen Anwendungsfall erfolgen.

Bei einer möglichen Ausführungsform wird für die auf Seiten des Nutzers befindliche Signal-Umwandlungseinrichtung 6 eine Schaltung mit niedrigem Leistungsverbrauch verwendet, die durch eine langlebige Batterie gespeist wird, so dass die Signal-Umwandlungseinrichtung 6 nahezu wartungsfrei für eine lange Zeitdauer funktioniert.

Die an einem Schnittstellengerät des Netzwerkbetreibers angeordnete Detektionseinrichtung 9 detektiert nach einem Wellenlängendemultiplex die Lichtimpulse des empfangenen pulsförmigen Messsignals und misst die Pulswiederholrate mit elektronischen Mitteln. Da sich die Detektionseinrichtung 9 auf Seiten des Netzwerkbetreibers befindet, kann hierfür auch eine Schaltung eingesetzt werden, die relativ viel Leistung verbraucht. Die Impulswiederholrate kann in einem optischen Leistungspegel umgerechnet werden und nach Signalverarbeitung zur Bestimmung der Güte der Signalübertragung über die Strecke zum Nutzer ausgewertet werden.

Bei einer möglichen Ausführungsform ist die Signal-Umwandlungseinrichtung 6, wie sie beispielsweise in Fig. 3 dargestellt ist, an einem Ende eines Glasfaserkabels, welches eine oder mehrere Lichtwellenleiter 4 umfassen kann, integriert.

Bei einer möglichen Ausführungsform ist an dem anderen Ende des Glasfaserkabels die Detektionseinrichtung 9, wie sie beispielsweise in Fig. 4 dargestellt ist, integriert. Bei einer weiteren Ausführungsform der erfindungsgemäßen Messanordnung 1 kann die Signal-Umwandlungseinrichtung 6 zusammen mit der Signalauskopplungseinrichtung 5 und dem Multiplexer 7 in dem Transceiver 3 des Nutzers integriert sein.

Bei einer möglichen Ausführungsform sind Parameter der Signal-Umwandlungseinrichtung 6, insbesondere die Kapazität C des Kondensators 6-3 und die Schwellwertspannung $U_{th}$ der nichtlinearen Schaltung 6-4 zur Adaption für den jeweiligen Anwendungsfall einstellbar.

Bei einer möglichen Ausführungsform sind Parameter der Detektionseinrichtung 9, insbesondere die Taktfrequenz des Taktgenerators 9-5 zur Adaption an den jeweiligen Anwendungsfall einstellbar.

Mit der erfindungsgemäßen Messanordnung wird die optische Leistung P des Nutzsignals in einer Glasfaser bzw. einem Lichtwellenleiter 4 mit einem minimalen Leistungs- und Platzaufwand gemessen und an die entfernte Detektionseinrichtung 9 übermittelt. Die Entfernung zwischen dem Transceiver 2 des Netzwerkbetreibers und dem Transceiver 3 des Nutzers kann dabei bis zu einigen Kilometern umfasen.

**Patentansprüche**

1.  Verfahren zur Messung einer Leistung eines über einen Lichtwellenleiter (4) übertragenen optischen Nutzsignals mit den Schritten:

    (a) Umwandeln (S1) des übertragenen optischen Nutzsignals in ein pulsförmiges optisches Messsignal, dessen Impulswiederholrate von der Leistung des übertragenen optischen Nutzsignals abhängt;
    (b) Auswerten (S2) der Impulswiederholrate des umgewandelten optischen Messsignals zur Ermittlung der Leistung des über den Lichtwellenleiter (4) übertragenen optischen Nutzsignals.

2.  Verfahren nach Anspruch 1,
    wobei das optische Nutzsignal über den Lichtwellenleiter (4) zwischen einem Netzwerkbetreiber-Transceiver (2) eines Netzwerkbetreibers und einem Nutzer-Transceiver (3) eines Nutzers übertragen wird.

3.  Verfahren nach Anspruch 2,
    wobei das übertragene optische Nutzsignal auf der Seite des Nutzer-Transceivers (3) mittels eines Leistungssplitters (5) zur Leistungsmessung von dem Lichtwellenleiter (4) zumindest teilweise ausgekoppelt wird.

4.  Verfahren nach Anspruch 3,
    wobei das umgewandelte pulsförmige optische Messsignal mittels eines Multiplexers (7) in den Lichtwellenleiter des übertragenen optischen Nutzsignals oder in einen anderen Lichtwellenleiter eingekoppelt und zur Auswertung der Impulswiederholrate des pulsförmigen optischen Messsignals einer Detektionseinrichtung (9) zugeführt wird, die sich auf Seite des Netzwerkbetreiber-Transceivers (2) befindet.

5.  Verfahren nach einem der Ansprüche 1 bis 4,
    wobei das optische Messsignal eine andere Wellenlänge als das optische Nutzsignal aufweist.

6.  Verfahren nach einem der vorangehenden Ansprüche 1 bis 5, wobei die Impulswiederholrate des pulsförmigen optischen Messsignals proportional zu der Leistung des übertragenen optischen Nutzsignals ist.

7.  Messanordnung zur Messung einer Leistung eines über einen Lichtwellenleiter (4) übertragenen optischen Nutzsignals mit:

    (a) einer Signal-Umwandlungseinrichtung (6) zur Umwandlung des optischen Nutzsignals in ein pulsförmiges optisches Messsignal, dessen Impulswiederholrate von der Leistung des optischen Nutzsignals abhängt; und mit
    (b) einer Detektionseinrichtung (9), die die Impulswiederholrate des umgewandelten pulsförmigen optischen Messsignals zur Ermittlung der Leistung des über den Lichtwellenleiter (4) übertragenen optischen Nutzsignals auswertet.

8.  Messanordnung nach Anspruch 7,
    wobei die Messanordnung (1) einen Leistungssplitter (5) aufweist, der das auf dem Lichtwellenleiter (4) übertragene optische Nutzsignal zumindest teilweise zu der Signal-Umwandlungseinrichtung (6) auskoppelt.

9.  Messanordnung nach Anspruch 7 oder 8,

wobei die Messanordnung (1) einen Multiplexer (7) aufweist, der das optische Messsignal in den Lichtwellenleiter des optischen Nutzsignals zurückkoppelt oder in einen anderen Lichtwellenleiter (4) einkoppelt.

10. Messanordnung nach Anspruch 7,
wobei die Signal-Umwandlungseinrichtung (6) aufweist:

- eine Photodiode (6-1), die das ausgekoppelte optische Nutzsignal in einen elektrischen Ladestrom umwandelt,
- einen Kondensator (6-7), der durch den Ladestrom bis zum Erreichen einer Schwellwertspannung aufgeladen wird, und
- eine nicht-lineare elektronische Schaltung (6-4), die bei Erreichen der Schwellwertspannung den aufgeladenen Kondensator (6-3) an eine Laserdiode (6-5) schaltet, wobei sich der Kondensator über die Laserdiode entlädt, welche optische Lichtimpulse aussendet.

11. Messanordnung nach einem der vorangegangenen Ansprüche 7 bis 10,
wobei die Signal-Umwandlungseinrichtung (6) und die Detektionseinrichtung (9) an entgegengesetzten Enden des für die Übertragung des optischen Nutzsignals vorgesehenen Lichtwellenleiters (4) vorgesehen sind.

12. Anordnung zur Übertragung eines optischen Nutzsignals über einen Lichtwellenleiter (4), das an zumindest einem der beiden Enden des Lichtwellenleiters (4) mittels eines Leistungssplitters (5) an eine Signal-Umwandlungseinrichtung (6) ausgekoppelt wird, die das ausgekoppelte optische Nutzsignal in ein pulsförmiges optisches Messsignal umwandelt, dessen Impulswiederholrate von der Leistung des übertragenen optischen Nutzsignals abhängt.

13. Anordnung nach Anspruch 12,
wobei die Anordnung an dem anderen Ende des Lichtwellenleiters (4) eine Detektionseinrichtung (9) aufweist, die die Impulswiederholrate des umgewandelten pulsförmigen optischen Messsignals zur Ermittlung der Leistung des über den Lichtwellenleiter (4) übertragenen optischen Nutzsignals auswertet.

14. Anordnung nach einem der vorangegangenen Ansprüche 12 und 13,
wobei die Anordnung einen Multiplexer (7) aufweist, der das optische Messsignal in den Lichtwellenleiter (4) des optischen Nutzsignals zurückkoppelt oder in einen anderen Lichtwellenleiter einkoppelt.

**Claims**

1. Method for measuring a power for an optical user signal transmitted via an optical fiber (4), having the following steps:

(a) the transmitted optical user signal is converted (S1) into a pulsed optical measurement signal, the pulse repetition rate of which is dependent on the power of the transmitted optical user signal;
(b) the pulse repetition rate of the converted optical measurement signal is evaluated (S2) in order to ascertain the power of the optical user signal transmitted via the optical fiber (4).

2. Method according to Claim 1,
wherein the optical user signal is transmitted via the optical fiber (4) between a network operator transceiver (2) of a network operator and a user transceiver (3) of a user.

3. Method according to Claim 2,
wherein the transmitted optical user signal is at least partially decoupled from the optical fiber (4) at the user transceiver (3) end by means of a power splitter (5) for the purpose of measuring power.

4. Method according to Claim 3,
wherein the converted pulsed optical measurement signal is launched into the optical fiber of the transmitted optical user signal or into a different optical fiber by means of a multiplexer (7) and is supplied to a detection device (9) situated at the network operator transceiver (2) end for the purpose of evaluating the pulse repetition rate of the pulsed optical measurement signal.

5. Method according to one of Claims 1 to 4,
wherein the optical measurement signal has a different wavelength than the optical user signal.

**6.** Method according to one of the preceding Claims 1 to 5,
wherein the pulse repetition rate of the pulsed optical measurement signal is proportional to the power of the transmitted optical user signal.

**7.** Measurement arrangement for measuring a power for an optical user signal transmitted via an optical fiber (4), having:

(a) a signal conversion device (6) for converting the optical user signal into a pulsed optical measurement signal, the pulse repetition rate of which is dependent on the power of the optical user signal; and having
(b) a detection device (9) which evaluates the pulse repetition rate of the converted pulsed optical measurement signal in order to ascertain the power of the optical user signal transmitted via the optical fiber (4).

**8.** Measurement arrangement according to Claim 7,
wherein the measurement arrangement (1) has a power splitter (5) which at least partially decouples the optical user signal transmitted on the optical fiber (4) to the signal conversion device (6).

**9.** Measurement arrangement according to Claim 7 or 8,
wherein the measurement arrangement (1) has a multiplexer (7) which loops back the optical measurement signal into the optical fiber of the optical user signal or launches it into a different optical fiber (4).

**10.** Measurement arrangement according to Claim 7, wherein the signal conversion device (6) has:

- a photodiode (6-1) which converts the decoupled optical user signal into an electrical charging current,
- a capacitor (6-7) which is charged by the charging current until a threshold value voltage is reached, and
- a nonlinear electronic circuit (6-4) which connects the charged capacitor (6-3) to a laser diode (6-5) when the threshold value voltage is reached, said capacitor being discharged via the laser diode, which emits optical light pulses.

**11.** Measurement arrangement according to one of the preceding Claims 7 to 10,
wherein the signal conversion device (6) and the detection device (9) are provided at opposite ends of the optical fiber (4) provided for the transmission of the optical user signal.

**12.** Arrangement for transmitting an optical user signal via an optical fiber (4), said user signal being decoupled at at least one of the two ends of the optical fiber (4) by means of a power splitter (5) to a signal conversion device (6) which converts the decoupled optical user signal into a pulsed optical measurement signal, the pulse repetition rate of which is dependent on the power of the transmitted optical user signal.

**13.** Arrangement according to Claim 12,
wherein the arrangement has, at the other end of the optical fiber (4), a detection device (9) which evaluates the pulse repetition rate of the converted pulsed optical measurement signal in order to ascertain the power of the optical user signal transmitted via the optical fiber (4).

**14.** Arrangement according to one of the preceding Claims 12 and 13,
wherein the arrangement has a multiplexer (7) which loops back the optical measurement signal into the optical fiber (4) of the optical user signal or launches it into a different optical fiber.

**Revendications**

**1.** Procédé de mesure d'une puissance d'un signal utile optique transmis par une fibre optique (4), avec les étapes suivantes :

(a) transformation (S1) du signal utile optique transmis en un signal de mesure optique sous forme d'impulsions dont le taux de répétition dépend de la puissance du signal utile optique transmis ;
(b) évaluation (S2) du taux de répétition d'impulsions du signal de mesure optique transformé pour déterminer la puissance du signal utile optique transmis par la fibre optique (4).

**2.** Procédé selon la revendication 1, selon lequel le signal utile optique est transmis par la fibre optique (4) entre un émetteur-récepteur d'exploitant de réseau (2) d'un exploitant de réseau et un émetteur-récepteur d'utilisateur (3) d'un utilisateur.

3. Procédé selon la revendication 2, selon lequel, du côté de l'émetteur-récepteur d'utilisateur (3), le signal utile optique transmis est extrait au moins partiellement de la fibre optique (4) au moyen d'un séparateur de puissance (5) en vue de la mesure de puissance.

4. Procédé selon la revendication 3, selon lequel le signal optique de mesure transformé sous forme d'impulsions est introduit au moyen d'un multiplexeur (7) dans la fibre optique du signal utile optique transmis ou dans une autre fibre optique et, en vue de l'évaluation du taux de répétition d'impulsions du signal de mesure optique sous forme d'impulsions, il est envoyé à un dispositif détecteur (9) qui se trouve du côté de l'émetteur-récepteur d'exploitant de réseau (2).

5. Procédé selon l'une des revendications 1 à 4, selon lequel le signal de mesure optique a une longueur d'onde différente de celle du signal utile optique.

6. Procédé selon l'une des revendications 1 à 5, selon lequel le taux de répétition d'impulsions du signal de mesure optique sous forme d'impulsions est proportionnel à la puissance du signal utile optique transmis.

7. Dispositif de mesure pour la mesure d'une puissance d'un signal utile optique transmis par une fibre optique (4), avec :

   (a) un dispositif transformateur de signal (6) pour la transformation du signal utile optique en un signal de mesure optique sous forme d'impulsions dont le taux de répétition d'impulsions dépend de la puissance du signal utile optique ; et avec
   (b) un dispositif détecteur (9) qui évalue le taux de répétition d'impulsions du signal de mesure optique transformé sous forme d'impulsions afin de déterminer la puissance du signal utile optique transmis par la fibre optique (4).

8. Dispositif de mesure selon la revendication 7, dans lequel le dispositif de mesure (1) comporte un séparateur de puissance (5) qui extrait au moins partiellement le signal utile optique transmis par la fibre optique (4) en direction du dispositif transformateur de signal (6).

9. Dispositif de mesure selon la revendication 7 ou 8, dans lequel le dispositif de mesure (1) comporte un multiplexeur (7) qui réintroduit le signal de mesure optique dans la fibre optique du signal utile optique (4) ou qui l'introduit dans une autre fibre optique.

10. Dispositif de mesure selon la revendication 7, dans lequel le dispositif transformateur de signal (6) comporte :

    - une photodiode (6-1) qui transforme le signal utile optique extrait en un courant de charge électrique,
    - un condensateur (6-7) qui est chargé par le courant de charge jusqu'à atteindre une tension de seuil et
    - un circuit électronique non linéaire (6-4) qui, lorsque la tension de seuil est atteinte, branche le condensateur chargé (6-3) sur une diode laser (6-5), le condensateur se déchargeant alors par la diode laser qui émet des impulsions lumineuses optiques.

11. Dispositif de mesure selon l'une des revendications précédentes 7 à 10, dans lequel le dispositif transformateur de signal (6) et le dispositif détecteur (9) sont prévus à des extrémités opposées de la fibre optique (4) prévue pour la transmission du signal utile optique.

12. Dispositif pour la transmission d'un signal utile optique par une fibre optique (4), lequel signal utile optique est extrait à au moins l'une des deux extrémités de la fibre optique (4) au moyen d'un séparateur de puissance (5) vers un dispositif transformateur de signal (6) qui transforme le signal utile optique extrait en un signal de mesure optique sous forme d'impulsions dont le taux de répétition d'impulsions dépend de la puissance du signal utile optique transmis.

13. Dispositif selon la revendication 12, dans lequel le dispositif comporte à l'autre extrémité de la fibre optique (4) un dispositif détecteur (9) qui évalue le taux de répétition d'impulsions du signal de mesure optique transformé sous forme d'impulsions afin de déterminer la puissance du signal utile optique transmis par la fibre optique (4).

14. Dispositif selon l'une des revendications précédentes 12 et 13, dans lequel le dispositif comporte un multiplexeur (7) qui réintroduit le signal de mesure optique dans la fibre optique (4) du signal utile optique ou qui l'introduit dans une autre fibre optique.

## FIG 1

```
        ┌─────────┐
        │  Start  │
        └────┬────┘
             │
             ▼
   ┌──────────────────────┐
   │   Umwandeln des       │
   │ optischen Nutzsignales│        ~ S1
   │   in pulsförmiges     │
   │  optisches Messsignal │
   └──────────┬───────────┘
              │
              ▼
   ┌──────────────────────┐
   │   Auswerten der       │
   │ Impulswiederholrate   │        ~ S2
   │   des umgewandelten   │
   │ optischen Messsignales│
   └──────────┬───────────┘
              │
              ▼
        ┌─────────┐
        │  Stop   │
        └─────────┘
```

## FIG 2A

## FIG 2B

## FIG 2C

## FIG 2D

# FIG 3

6

Signal-Umwandlungseinrichtung

Popt, 1

6-1

$I_P$

6-2

Ladediode

6-3

$U_C$

NL Schaltung

6-4

$I_L$

6-5

Popt, 2

# FIG 4

9

Detektionseinrichtung

Trans-impedanz-Verstärker

Begrenzer-Verstärker

T

CTRL

9-7

9-2

Pimpulse

Photodiode

9-1

T

Reset

Zähler

Out 1 ... Out N

Takt

Latch

In 1 ... In N

Latch-Register

Out 1 ... Out N

Mikrokontroller

9-5

9-3

9-4

9-6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0846006 A